# EUROPÄISCHE PATENTANMELDUNG

(11) **EP 4 005 971 A1**
(43) Veröffentlichungstag der Anmeldung: **01.06.2022**
(21) Anmeldenummer: 21206665.8
(22) Anmeldetag: 05.11.2021
(51) Int. Cl.: B67C 3/28

(54) **VORRICHTUNG UND VERFAHREN ZUM BEFÜLLEN EINES BEHÄLTERS MIT EINEM FÜLLPRODUKT**

(30) Priorität: 05.11.2020 DE 102020129149
(71) Anmelder: KRONES AG, 93073 Neutraubling (DE)
(72) Erfinder: Poeschl, Stefan, 93073 Neutraubling (DE)
(74) Vertreter: Nordmeyer, Philipp Werner

(57) **Zusammenfassung**

Vorrichtung (1) und Verfahren zum Befüllen eines Behälters (100) mit einem Füllprodukt, vorzugsweise in einer Getränkeabfüllanlage, wobei die Vorrichtung (1) aufweist: zumindest ein Füllventil (2, 11), das eingerichtet ist, um das Füllprodukt in den Behälter (100) einzuleiten; zumindest einen über eine Produktleitung (5, 21) mit dem Füllventil (2, 11) verbundenen Durchflussmesser (6, 22, 32, 42), der eingerichtet ist, um eine in der Produktleitung (5, 21) den Durchflussmesser (6, 22, 32, 42) passierende Füllproduktmenge zu ermitteln; und eine Steuerung (150), die mit dem Füllventil (2, 11) sowie dem Durchflussmesser (6, 22, 32, 42) in Kommunikation steht und eingerichtet ist, um das Füllventil (2, 11) während des Füllvorgangs anzusteuern; dadurch gekennzeichnet, dass die Steuerung (150) mit dem Durchflussmesser (6, 22, 32, 42) bidirektional in Kommunikation steht und eingerichtet ist, um eine Parametrierung des Durchflussmessers (6, 22, 32, 42) in Abhängigkeit einer oder mehrerer Füllprozessgrößen vorzunehmen.

## Beschreibung

### Technisches Gebiet

Die vorliegende Erfindung betrifft eine Vorrichtung und ein Verfahren zum Befüllen eines Behälters mit einem Füllprodukt, vorzugsweise in einer Getränkeabfüllanlage.

### Stand der Technik

Zum Abfüllen von Füllprodukten, beispielsweise von Getränken in einer Getränkeabfüllanlage, sind Füllorgane unterschiedlicher Bauart bekannt. Der Durchfluss des Füllprodukts durch das Füllorgan und damit das Einleiten in einen Behälter wird zumeist durch ein Füllventil gesteuert, das einen Ventilkegel umfasst, der in einer zum Ventilkegel komplementär geformten Ventilaufnahme sitzt. Durch Anheben des Ventilkegels aus der Ventilaufnahme bzw. aus dem Ventilsitz wird so der Füllvorgang gestartet, und durch anschließendes Absenken des Ventilkegels auf den Ventilsitz wird der Füllvorgang wieder beendet.

Um das in den Behälter einströmende Füllvolumen stufenlos steuern und entsprechend je nach Füllprodukt und Prozessumgebung optimierte Volumenstromkurven nachfahren zu können, sind Proportionalventile als Füllventile anwendbar, die eine im Wesentlichen stufenlose Steuerung des Volumenstroms ermöglichen. Im Unterschied zu Sperrventilen, die nur die beiden Zustände offen/geschlossen einnehmen können, lassen sich die Proportionalventile so ansteuern, dass ein kontinuierliches oder quasi-kontinuierliches Spektrum an Öffnungspositionen zuverlässig und reproduzierbar einstellbar ist. Zu diesem Zweck werden die Proportionalventile üblicherweise über einen Schrittmotor betätigt, wodurch bauartbedingt auch Ventile mit einem diskreten Spektrum an Öffnungspositionen mit kleinen Intervallen unter die Proportionalventile fallen.

Es ist weiterhin bekannt, den in den zu befüllenden Behälter einfließenden Volumenstrom während des Befüllens über einen Durchflussmesser zu ermitteln, beispielsweise um das Füllende zu bestimmen oder allgemein die beabsichtigte Füllkurve sicherzustellen. Der Durchflussmesser ist dabei typischerweise oberhalb des Füllventils angeordnet und misst den während des Füllvorgangs in den Behälter einströmenden Volumenstrom. Aktuell werden induktive Durchflussmesser und Massendurchflussmesser in der Fülltechnik eingesetzt. Beim induktiven Durchflussmesser wird der Volumenstrom über die Fließgeschwindigkeit in einem definierten Querschnitt ermittelt, indem ein veränderliches elektromagnetisches Feld senkrecht zur Fließrichtung des Produkts angelegt wird, wodurch eine Ladungstrennung von in der Flüssigkeit vorhandenen Ladungsträgern wie etwa Ionen erfolgt. Die durch die Ladungstrennung entstandene Spannung ist proportional zur Strömungsgeschwindigkeit der Ladungsträger und kann zur Bestimmung des Volumenstroms gemessen werden.

Die Messgenauigkeit des Durchflussmessers hängt unter anderem von der Beschaffenheit und Fließgeschwindigkeit des Füllprodukts ab. Der Arbeitsbereich des Durchflussmessers, Feldstärke, Abtastrate und andere Parameter werden bisher so gut wie möglich für den gesamten Messbereich eingestellt. Daraus folgt, dass die Parametrierung des Durchflussmessers nicht für alle Füllprodukte und Abfüllgeschwindigkeiten optimal ist, sondern einen Kompromiss darstellt. Dies gilt auch für Durchflussmesser anderer Bauart, wie etwa für die genannten Massendurchflussmesser, deren Parametrierung gegebenenfalls ebenso einen großen Prozessbereich abdecken muss.

### Darstellung der Erfindung

Eine Aufgabe der vorliegenden Erfindung besteht darin, das Befüllen eines Behälters mit einem Füllprodukt zu verbessern, insbesondere die Abfüllgenauigkeit und die Zuverlässigkeit des Abfüllprozesses zu erhöhen.

Die Aufgabe wird durch eine Vorrichtung mit den Merkmalen des Anspruchs 1 sowie ein Verfahren mit den Merkmalen des nebengeordneten Verfahrensanspruchs gelöst. Vorteilhafte Weiterbildungen folgen aus den Unteransprüchen, der folgenden Darstellung der Erfindung sowie der Beschreibung bevorzugter Ausführungsbeispiele.

Die Vorrichtung und das Verfahren gemäß der Erfindung dienen dem Befüllen von Behältern mit einem Füllprodukt. Sie kommen besonders bevorzugt in einer Getränkeabfüllanlage zur Anwendung, beispielsweise zum Abfüllen von Wasser (karbonisiert oder still), Bier, Wein, Saft, Softdrinks, Smoothies, Milchprodukten und dergleichen.

Die Vorrichtung gemäß der Erfindung umfasst zumindest ein Füllventil, das eingerichtet ist, um das Füllprodukt in den Behälter einzuleiten, sowie zumindest einen über eine Produktleitung mit dem Füllventil verbundenen Durchflussmesser, der eingerichtet ist, um eine in der Produktleitung den Durchflussmesser passierende Füllproduktmenge zu ermitteln. Der Durchflussmesser kann zu diesem Zweck den Volumenstrom, die transportierte Masse oder eine andere physikalische Größe messen, die ein Maß für die durchströmende Fluidmenge ist. Vorzugsweise arbeitet der Durchflussmesser wie im Fall der induktiven Bauart berührungslos.

Die Produktleitung bezieht das Füllprodukt vorzugsweise aus einem Füllproduktreservoir, an das die Produktleitung in diesem Fall angebunden ist. Das Füllproduktreservoir kann in Form eines Zentralkessels oder Ringkessels realisiert sein und kann auf einem Füllkarussell mit diesem rotierend angeordnet sein. Alternativ kann das Füllproduktreservoir auch ein beigestellter Kessel bevorzugt im Bereich der Füllmaschine sein.

Die Vorrichtung weist ferner eine Steuerung auf, die mit dem Füllventil sowie dem Durchflussmesser in Kommunikation steht, drahtlos oder drahtgebunden, und eingerichtet ist, um das Füllventil während des Füllvorgangs, d.h. insbesondere während des Einleitens des Füllprodukts in den Behälter, anzusteuern. Im einfachen Fall eines als Sperrventil ausgebildeten Füllventils wird die Ansteuerung beispielsweise durch ein zeitabhängiges Signal realisiert, welches das Füllventil veranlasst, den entsprechenden Durchlass der Produktleitung zu öffnen oder zu schließen. Im Fall eines Proportionalventils umfasst die Ansteuerung im Allgemeinen weitere Informationen, die den Öffnungszustand kennzeichnen, den das Füllventil annehmen soll.

Gemäß der Erfindung steht die Steuerung mit dem Durchflussmesser bidirektional in Kommunikation und ist eingerichtet, um eine Parametrierung des Durchflussmessers in Abhängigkeit einer oder mehrerer Füllprozessgrößen vorzunehmen. "Bidirektional" meint hierbei, dass nicht nur Messdaten, verarbeitet oder unverarbeitet, vom Durchflussmesser an die Steuerung übermittelbar sind, etwa um den weiteren Füllprozess zu steuern oder zu regeln, sondern dass die Steuerung Informationen an den Durchflussmesser senden kann. Diese Signale, Befehle oder dergleichen von der Steuerung an den Durchflussmesser dienen der Parametrierung des Durchflussmessers, d.h. der Änderung eines oder mehrerer Parameter, die die Arbeitsweise des Durchflussmessers beeinflussen, insbesondere zur Anpassung bzw. Optimierung des Messbereichs des Durchflussmessers. Hierbei ist zu beachten, dass die Parametrierung von jener Steuerung ausgeht bzw. vorgenommen wird, die der Ansteuerung des Füllventils dient.

Durch eine solche bidirektionale Kommunikation zwischen dem Durchflussmesser und der Steuerung des Füllventils sowie die Parametrierung des Durchflussmessers durch diese Steuerung kann der Arbeitsbereich des Durchflussmessers optimal auf die aktuelle Abfüllsituation, beispielsweise auf das Füllprodukt, die Abfüllmenge, Abfüllgeschwindigkeit oder allgemeiner die Füllkurve, eingestellt werden. Auf diese Weise lassen sich die Abfüllgenauigkeit und Zuverlässigkeit der Vorrichtung verbessern, da die Parametrierung dynamisch von der Steuerung geändert wird und somit nicht als Kompromiss für unterschiedliche Abfüllsituationen im Voraus eingestellt werden muss.

Die vorstehend dargelegte dynamische Parametrierung des Durchflussmessers kann gegebenenfalls auch mittelbar durch die Steuerung erfolgen, indem eine Kommunikation zwischen dem Füllventil und dem Durchflussmesser derart implementiert wird, dass das Füllventil seinen Zustand an den Durchflussmesser sendet, der daraufhin seine Parameter bzw. seinen Messbereich auf den Öffnungszustand des Füllventils abstimmen kann. Eine solche mittelbare Parametrierung fällt ebenfalls unter die beanspruchte bidirektionale Kommunikation.

Vorzugsweise ist die Steuerung eingerichtet, um die Parametrierung des Durchflussmessers während des Füllprozesses, vorzugsweise während des Einleitens des Füllprodukts in den Behälter, vorzunehmen. Somit kann der Arbeitsbereich des Durchflussmessers sogar während des Abfahrens einer Füllkurve optimal an die aktuellen Gegebenheiten angepasst werden, wodurch die Abfüllgenauigkeit weiter verbessert wird.

Vorzugsweise umfassen die eine oder mehreren Füllprozessgrößen eine Steuergröße zur Ansteuerung des Füllventils und/oder eine oder mehrere Füllprodukteigenschaften, wie etwa die Viskosität des Füllprodukts und/oder den Brix-Gehalt des Füllprodukts und/oder den Fruchtfasergehalt des Füllprodukts und/oder den Pulpegehalt. Unter Berücksichtigung von Füllprodukteigenschaften und/oder einer Steuergröße, die den Öffnungszustand des Füllventils angibt, kann die Parametrierung des Durchflussmessers besonders genau auf die aktuelle Abfüllsituation justiert werden.

Vorzugsweise ist das Füllventil ein Proportionalventil. Das Proportionalventil kann gegebenenfalls um ein Sperrventil ergänzt werden, insbesondere um den Füllbeginn und das Füllende zeitlich präzise und reprozierbar durchzuführen. Durch Anwendung eines Proportionalventils können verschiedene Füllkurven realisiert werden, die je nach Füllprodukt, Behältergröße, Behälterform und dergleichen ein optimales, produktschonendes Abfüllen gewährleisten.

Als Proportionalventile werden hierin Ventile angesehen, die eine im Wesentlichen stufenlose Steuerung des Volumenstroms ermöglichen. Im Unterschied zu Sperrventilen, die nur die beiden Zustände offen/geschlossen einnehmen können, lassen sich die Proportionalventile so ansteuern, dass ein kontinuierliches oder quasi-kontinuierliches Spektrum an Öffnungspositionen zuverlässig und reproduzierbar einstellbar ist. Zu diesem Zweck werden die Proportionalventile beispielsweise über einen Schrittmotor betätigt, wodurch bauartbedingt auch Ventile mit einem diskreten Spektrum an Öffnungspositionen mit kleinen Intervallen, hierin als "quasi-kontinuierlich" bezeichnet, unter die Proportionalventile fallen.

Im Fall der Anwendung eines Proportionalventils umfassen die eine oder mehreren Füllprozessgrößen besonders bevorzugt eine Steuergröße zur Ansteuerung des Füllventils, wobei die Steuergröße ein Maß für den einzustellenden Öffnungsgrad bzw. Öffnungszustand des Füllventils ist. Die Steuergröße kann den einzustellenden Öffnungsgrad des Proportionalventils unmittelbar oder mittelbar kennzeichnen. "Mittelbar" bedeutet hierbei, dass die Steuergröße beispielsweise die gewünschte Durchflussmenge, Abfüllmenge oder eine andere Größe, die ein Maß für den Öffnungsgrad des Proportionalventils ist oder bestimmt, sein kann. Es sei darauf hingewiesen, dass die Bezeichnung "Steuergröße" eine Information, einen Befehl, ein Signal oder dergleichen kennzeichnet und nicht die Art der Prozesssteuerung oder Prozessregelung einschränkt. In anderen Worten, die Steuergröße kann beispielsweise das Resultat einer Regelung, etwa einer PID-Regelung, oder einer Steuerung des Füllventils sein. Indem eine solche Steuergröße, wobei davon abgeleitete Größen umfasst sind, für die Parametrierung des Durchflussmessers genutzt wird, kann der Arbeitsbereich des Durchflussmessers im Hinblick auf die Abfüllmenge und Wunschgeschwindigkeit basierend beispielsweise auf einer abzufahrenden Füllkurve stets optimal eingestellt werden.

Vorzugsweise ist der Durchflussmesser induktiver Bauart, d.h. der Volumenstrom wird über die Fließgeschwindigkeit in einem definierten Querschnitt ermittelt, indem ein vorzugsweise veränderliches elektromagnetisches Feld senkrecht zur Fließrichtung des Produkts angelegt wird, wodurch eine Ladungstrennung von in der Flüssigkeit vorhandenen Ladungsträgern wie etwa Ionen erfolgt. Die durch die Ladungstrennung entstandene Spannung ist proportional zur Strömungsgeschwindigkeit der Ladungsträger und kann zur Bestimmung des Volumenstroms gemessen werden. Im Fall eines solchen induktiven Durchflussmessers umfassen die bei der Parametrierung des Durchflussmessers anzupassenden Parameter vorzugsweise eine Frequenz und/oder Stärke des elektromagnetischen Felds und/oder eine Abtastrate. Allerdings lassen sich auch Durchflussmesser anderer Bauart, beispielsweise Massendurchflussmesser, durch die Steuerung dynamisch Parametrieren.

Vorzugsweise umfasst die Parametrierung des Durchflussmessers eine Anpassung einer durchflussmesserseitigen Elektronik und/oder eines Algorithmus zur Ermittlung und/oder Auswertung der vom Durchflussmesser aufgenommenen Messdaten. In anderen Worten, auch eine durchflussmesserseitige Elektronik inklusive etwaiger Algorithmen zur Messdatenverarbeitung fällt hierin unter die Parametrierung, da eine Optimierung des Arbeitsbereichs des Durchflussmessers auch auf der Ebene der Datenverarbeitung vorgenommen werden kann.

Vorzugsweise ist die Vorrichtung bzw. das Füllventil für das Freistrahlfüllen eingerichtet. Das Füllventil gibt in diesem Fall über eine Ventilmündung das Füllprodukt so aus, dass dieses nach Überbrückung eines Freistrahlbereichs in eine Mündung des mit dem Füllprodukt zu befüllenden Behälters eingefüllt wird. Solche Füllventile in Form von Freistrahlventilen sind beispielsweise zum Abfüllen von stillen Füllprodukten, insbesondere zum Abfüllen von stillem Wasser geeignet. Allerdings kommen auch andere Füllprodukte in Betracht, wie beispielsweise Saft, Smoothies, Wein, Milchprodukte und dergleichen.

Allerdings ist die hier dargelegte dynamische Parametrierung eines oder mehrerer Durchflussmesser nicht auf Freistrahlfüller beschränkt. Vielmehr kann sie stets dann sinnvoll genutzt werden, wenn zur Steuerung oder Regelung des Abfüllprozesses ein oder mehrere Durchflussmesser zur Anwendung kommen.

So kann die dynamische Parametrierung beispielsweise in einem sogenannten Gegendruckverfahren angewendet werden, das insbesondere bei der Abfüllung karbonisierter Füllprodukte, wie beispielsweise Bier, Mineralwasser oder Softdrinks, zur Anwendung kommt. Hierbei wird der zu befüllende Behälter vordem Einleiten des Füllprodukts mit einem Spanngas auf einen Überdruck vorgespannt. Zu diesem Zweck werden die Behältermündung und die Ventilmündung in eine druckdichte Verbindung gebracht. Als Spanngas wird beispielsweise CO₂ verwendet. Entsprechend wird das in dem karbonisierten Füllprodukt gebundene CO₂ beim Einfüllen in den zu befüllenden Behälter gegen den erhöhten CO₂-Druck eingefüllt, so dass ein Entbinden des CO₂ aus dem Füllprodukt verringert oder sogar ganz verhindert werden kann. Die Neigung des Füllprodukts zum Aufschäumen wird reduziert, so dass auf diese Weise der Füllvorgang insgesamt beschleunigt werden kann.

Alternativ kann die dynamische Parametrierung bei Unterdruckverfahren angewendet werden, in denen das Füllprodukt unter einem Fülldruck in den Behälter, der sich relativ zum Fülldruck unter Unterdruck befindet, eingeleitet wird. Dieser Fall wird hierin auch als "schlagartiges Befüllen" bezeichnet, da das Einleiten des Füllprodukts besonders schnell realisierbar ist. Um den Behälter mit dem Füllprodukt schlagartig zu befüllen, wird der Innenraum des Behälters bei verschlossenem Füllventil und einem geöffneten Vakuumventil über eine Vakuumvorrichtung evakuiert und entsprechend auf einen Unterdruck gebracht. Ist der vorgegebene Unterdruck, beispielsweise 0,1 bar, in dem Behälter erreicht, werden das Vakuumventil geschlossen und das Füllventil geöffnet. Durch die große Druckdifferenz zwischen dem Innenraum des Behälters, in dem nun ein Unterdruck herrscht, und dem Füllproduktreservoir, in dem ein Überdruck (relativ zum Unterdruck im Behälter und/oder relativ zum Normaldruck) herrscht, kommt es zu einer schlagartigen Befüllung des Behälters mit dem Füllprodukt. Der Füllvorgang kann damit sehr schnell durchgeführt werden und ist entsprechend auch schnell beendet.

Da gemäß diesem schlagartigen Befüllen während des Füllvorgangs aufgrund des sich bereits im Behälter befindlichen Unterdrucks zumindest in der ersten Phase der Befüllung kein Gas aus dem Behälter verdrängt sondern lediglich der Unterdruck abgebaut wird, kann das Füllprodukt auch über den gesamten Mündungsquerschnitt der Mündung des Behälters hinweg in den Behälter einströmen. Maßnahmen zum Ableiten eines während der Befüllung verdrängten Gases sind nicht erforderlich.

Gemäß einer besonders bevorzugten Ausführungsform kann die dynamische Parametrierung eines oder mehrerer Durchflussmesser beim Abfüllen mehrkomponentiger Füllprodukte angewendet werden.

Die Vorrichtung ist in diesem Fall zum Befüllen eines Behälters mit einem Füllprodukt aus einer Basisflüssigkeit und zumindest einer Dosagekomponente eingerichtet. Das Füllprodukt ist demnach ein mehrkomponentiges Füllprodukt aus zumindest zwei Komponenten, wobei eine der Komponenten zur sprachlichen Unterscheidung hierin als "Basisflüssigkeit" bezeichnet sei und vorzugsweise als Hauptkomponente fungiert. Neben dem Abfüllen des Füllprodukts ist die Vorrichtung zum Zusammenführen bzw. Mischen der Komponenten eingerichtet und übernimmt insofern zumindest einen Teil des Herstellungsprozesses des abzufüllenden Füllprodukts. Die Basisflüssigkeit ist beispielsweise Wasser. Die Dosagekomponente(n) kann/können beispielsweise Sirup, Fruchtfleisch enthaltende Flüssigkeiten, Pulpe, Aromen usw. umfassen. Da die Vorrichtung jedoch nicht nur zum Abfüllen von Getränken im Lebensmittelbereich geeignet ist, sondern beispielsweise auch für die Zusammenmischung/Dosierung und Abfüllung von Arzneimitteln, Farben und anderen Flüssigkeiten, umfassend hochviskose und pastöse Flüssigkeiten, ist die Wahl der Basisflüssigkeit und Dosagekomponente(n) nicht auf besondere Weise eingeschränkt.

Die Vorrichtung gemäß dieser Gruppe von Ausführungsformen weist ein Basisreservoir, das eingerichtet ist, um die Basisflüssigkeit bereitzustellen, sowie das Füllventil auf, das eingerichtet ist, um das Füllprodukt in den Behälter einzuleiten. Die Bezeichnung "Basisreservoir" umfasst hierin jedwede Quelle zur Bereitstellung der Basisflüssigkeit. So kann das Basisreservoir beispielsweise durch einen Tank oder Behälter realisiert sein, ebenso durch eine Rohr- oder Schlauchleitung, welche die Basisflüssigkeit von einer externen Anlage zuführt. Dies gilt analog für etwaige Dosagereservoire (weiter unten beschrieben) zur Bereitstellung von Dosagekomponenten.

Die Vorrichtung umfasst in diesem Fall ferner eine Basislinie mit einer Basisleitung, die das Basisreservoir mit dem Füllventil in Fluidverbindung bringt, einem Durchflussmesser, der an der Basisleitung zwischen dem Basisreservoir und dem Füllventil angeordnet und eingerichtet ist, um die in der Basisleitung den Durchflussmesser passierende Fluidmenge zu bestimmen, sowie einem Dosierraum, der zwischen dem Durchflussmesser und dem Füllventil angeordnet ist. Der Durchflussmesser kann zu diesem Zweck den Volumenstrom, die transportierte Masse oder eine andere physikalische Größe messen, die ein Maß für die durchströmende Fluidmenge ist. Vorzugsweise arbeitet der Durchflussmesser berührungslos. Ferner ist der Durchflussmesser vorzugsweise so angeordnet, dass dieser ausschließlich von der Basisflüssigkeit durchströmt wird, d.h. etwaige zudosierte Dosagekomponenten (nachstehend beschrieben) gelangen nicht bis zum Durchflussmesser. Damit ändern sich die Medieneigenschaften am Durchflussmesser nicht, und das Leitungssystem wird in diesen Bereichen nicht durch unterschiedliche Fluide verschmutzt.

Die Vorrichtung weist ferner zumindest einen Dosagezweig der Basislinie auf, der eingerichtet ist, um eine Dosagekomponente in den Dosierraum der Basislinie einzuleiten. Der Dosierraum dient somit dem Einmischen einer oder mehrerer Dosagekomponenten in die Basisflüssigkeit und kann im einfachsten Fall ein Leitungsabschnitt der Basisleitung sein. Der Dosagezweig weist zu diesem Zweck vorzugsweise ein Dosagereservoir, das die Dosagekomponente bereitstellt, eine damit in Fluidverbindung stehende Dosageleitung sowie ein Dosageventil auf, das die Dosageleitung mit dem Dosierraum schaltbar in Fluidverbindung bringt.

Es sei darauf hingewiesen, dass die Bezeichnungen "Basis-" und "Dosage-" keine Aussagen über die Art, Qualität oder Menge der betreffenden Abschnitte und Füllproduktkomponenten machen. Sie dienen hierin in erster Linie der sprachlichen Unterscheidung.

Die vorstehend dargelegte Vorrichtung zum Befüllen eines Behälters mit einem mehrkomponentigen Füllprodukt aus einer Basisflüssigkeit und zumindest einer Dosagekomponente stellt verschiedene technische Beiträge und Vorteile gegenüber herkömmlichen Konzepten bereit. So vereinfacht die vollständige Befüllung des Behälters mit mehreren Komponenten an einer einzigen Füllposition (der Position des Füllventils) die Handhabung der Behälter. Ferner muss während der Dosierphase kein Behälter unter dem Füllventil stehen, da die Dosierung nicht beim Abfüllen sondern in den Dosierräumen vorgenommen wird. Die Zeit zum Dosieren kann synergetisch für den Behältertransport genutzt werden. Damit ist das hierin dargestellte Konzept sowohl für Lineartaktmaschinen mit einer oder mehreren Füllstellen als auch Rundläufermaschinen anwendbar. Im Fall von Rundläufermaschinen können die Behälter das Karussell schon nach einem geringen Drehwinkel wieder verlassen. Im Fall von Füllmaschinen, die zum Abfüllen karbonisierter Getränke eingerichtet sind, kann eine etwaige Entlastungszeit synergetisch für die Dosierphase des nachfolgenden Behälters genutzt werden.

Der maschinenbauliche Aufwand zur Realisierung der Vorrichtung ist vergleichsweise gering, da das Leitungssystem durch Rohre oder Schlauchleitungen mit wenigen Ventilen und nur einem einzigen Durchflussmesser pro Linie realisierbar ist. Es müssen keine komplizierten Geometrien eingebaut werden, wodurch die Vorrichtung einfach zu reinigen und zu warten ist. Das Verstopfungsrisiko ist gering. Die Vorrichtung ist zudem zum Dosieren hochviskoser Fluide geeignet. Eine Verschleppung intensiver Aromastoffe, die beispielsweise in Dichtungen migrieren und nicht durch eine Reinigung aus den Dichtungen entfernt werden können, wird minimiert, da die Linien erst kurz vor dem Füllventil zusammengeführt werden und die erst bei der Abfüllung in die fließende Strömung der Basislinie eingeleitet werden.

Ein technisches Problem der Eindosierung unter Verdrängung der Basisflüssigkeit bzw. Hauptkomponente beim Einleiten der Dosagekomponente(n) und unter Verwendung eines Durchflussmessers betrifft die Grenzen des Dosierbereichs. Der Dosierbereich kann sowohl durch die zur Verfügung stehende Dosierzeit als auch durch den Volumenstrom des zu dosierenden Mediums beeinflusst werden. Die dynamische Parametrierung des Durchflussmessers löst dieses Problem oder verbessert zumindest die Genauigkeit der Eindosierung.

Vorzugsweise umfasst die Vorrichtung ferner zumindest eine Nebenlinie mit einer Leitung, die das Basisreservoir über ein Ventil, das vorzugsweise als Absperrventil ausgeführt ist, mit dem Dosierraum der Basislinie in Fluidverbindung bringt, einem Durchflussmesser, der an der Leitung zwischen dem Basisreservoir und dem Ventil angeordnet und eingerichtet ist, um die in der Leitung den Durchflussmesser der Nebenlinie passierende Fluidmenge zu bestimmen, sowie einem Dosierraum, der zwischen dem Durchflussmesser der Nebenlinie und dem Ventil angeordnet ist.

Die Leitung(en) der einen oder mehreren Nebenlinien beziehen die Basisflüssigkeit wie die Basisleitung ebenso vom Basisreservoir, beispielsweise indem diese mit dem Basisreservoir verbunden sind oder stromaufwärts des Durchflussmessers der Basislinie von der Basisleitung abzweigen. Selbstverständlich können die Basislinie und die Nebenlinie(n) die Basisflüssigkeit aus unterschiedlichen Reservoiren beziehen; in diesem Fall bezeichnet das Merkmal "Basisreservoir" die Gesamtheit aller Reservoire, welche die Basisflüssigkeit bereitstellen.

Der Durchflussmesser der Nebenlinie kann wie der Durchflussmesser der Basislinie den Volumenstrom, die transportierte Masse oder eine andere physikalische Größe messen, die ein Maß für die durchströmende Fluidmenge ist. Vorzugsweise arbeitet der Durchflussmesser der Nebenlinie berührungslos. Ferner ist der Durchflussmesser der Nebenlinie vorzugsweise so angeordnet, dass dieser ausschließlich von der Basisflüssigkeit durchströmt wird, d.h. etwaige zudosierte Dosagekomponenten gelangen nicht bis zum Durchflussmesser. Damit ändern sich die Medieneigenschaften am Durchflussmesser nicht, und das Leitungssystem wird in diesen Bereichen nicht durch unterschiedliche Fluide verschmutzt.

Die Vorrichtung weist vorzugsweise ferner zumindest einen Dosagezweig der Nebenlinie auf, der eingerichtet ist, um eine Dosagekomponente in den Dosierraum der Nebenlinie einzuleiten. Der Dosierraum der Nebenlinie dient somit wie der Dosierraum der Basislinie dem Einmischen einer oder mehrerer Dosagekomponenten in die Basisflüssigkeit und kann im einfachsten Fall ein Leitungsabschnitt der Nebenlinie sein.

Der Dosagezweig der Nebenlinie weist zu diesem Zweck vorzugsweise ein Dosagereservoir des Dosagezweigs der Nebenlinie, das die Dosagekomponente bereitstellt, eine damit in Fluidverbindung stehende Dosageleitung des Dosagezweigs der Nebenlinie sowie ein Dosageventil des Dosagezweigs der Nebenlinie auf, das die Dosageleitung des Dosagezweigs der Nebenlinie mit dem Dosierraum der Nebenlinie schaltbar in Fluidverbindung bringt.

Ein wichtiger technischer Beitrag besteht darin, dass durch die Anwendung einer oder mehrerer Nebenlinien, die wie Dosagezweige in den Dosierraum der Basislinie einmünden, der Dosierbereich erhöht und die Genauigkeit der Dosierung, insbesondere bei einer gleichzeitigen Einmischung großer und kleiner Dosiermengen, deutlich verbessert werden können. Eine weitere Erhöhung des Dosierbereiches und/oder Optimierung der Dosierzeit folgt zudem daraus, dass in Zeiten, in denen Dosagekomponenten eines Typs in einer Linie nicht dosiert werden, Dosagekomponenten anderen Typs darin dosiert, d.h. beispielsweise für eine spätere Abfüllung vorbereitet werden können. Dies führt zu einer deutlichen Erhöhung der Flexibilität der Vorrichtung.

Vorzugsweise sind der Dosagezweig der Basislinie und der Dosagezweig der Nebenlinie eingerichtet, um die gleiche Dosagekomponente in den zugehörigen Dosierraum einzuleiten. Zu diesem Zweck weist der Dosagezweig der Basislinie vorzugsweise ein Dosagereservoir des Dosagezweigs der Basislinie und der Dosagezweig der Nebenlinie ein Dosagereservoir des Dosagezweigs der Nebenlinie auf, die beide die gleiche Dosagekomponente enthalten bzw. bereitstellen. Die Vorrichtung erlaubt gemäß dieser Ausführungsform eine besonders präzise, individualisierte Dosierung in einem weiten Dosierbereich, da je nachdem in welchem Bereich sich die gewünschte Dosagemenge befindet, die Basislinie, die Nebenlinie oder eine Kombination beider Linien genutzt werden kann. Zu diesem Zweck kann die Steuerung eingerichtet sein, um nicht nur die Zudosierung der Dosagekomponente(n) in die Dosierräume zu regeln, sondern außerdem festzulegen, durch welche Linien oder durch welche Kombination von Linien die gewünschte Dosagemenge am genauesten und/oder effizientesten dosierbar ist.

Die unterschiedlichen Dosageregime der Basis- und Nebenlinie(n) lassen sich durch unterschiedliche Nennweiten bzw. Nenngrößen der beteiligten Komponenten realisieren. So weist der Dosierraum der Basislinie vorzugsweise ein anderes, vorzugsweise größeres, Innenvolumen als der Dosierraum der Nebenlinie(n) auf. Alternativ oder zusätzlich ist der Durchflussmesser der Basislinie vorzugsweise zur Bestimmung anderer, vorzugsweise größerer, Durchflussmengen als der Durchflussmesser der Nebenlinie eingerichtet, wobei die Parametrierung hier anwendbar ist, um den Arbeitsbereich der betreffenden Durchflussmesser dynamisch einzustellen. Alternativ oder zusätzlich können sich die Leitungsquerschnitte der beiden Dosierräume und/oder Durchflussmesser und/oder Leitungsabschnitte stromaufwärts der Durchflussmesser unterscheiden.

Es sei darauf hingewiesen, dass sich die Bezeichnungen "stromabwärts" und "stromaufwärts" hierin auf die Füllrichtung beziehen, d.h. jene Richtung, in die das Füllprodukt beim Entleeren der Dosierräume zum Befüllen des Behälters strömt.

Vorzugsweise ist der Durchflussmesser der Basislinie und/oder der Durchflussmesser der Nebenlinie eingerichtet, um die passierende bzw. durchströmende Fluidmenge in der Füllrichtung und/oder der der Füllrichtung entgegengesetzten Richtung zu bestimmen. Hierbei ist die "Rückstrommessung", d.h. die Bestimmung des von der eingeleiteten Dosagekomponente rückwärts aus dem Dosierraum verdrängten Volumens der Basisflüssigkeit, besonders bevorzugt, da auf diese Weise das Mischungsverhältnis auf maschinenbaulich einfache, kompakte und zuverlässige Weise bestimmbar ist. Insbesondere ist lediglich ein einziger Durchflussmesser pro Linie installiert, um sowohl die Basisflüssigkeit als auch die Dosagekomponente(n) einzumessen und damit deren Verhältnis zu bestimmen.

Vorzugsweise weist die Vorrichtung mehrere Füllventile auf, die an einem Karussell eines Rundläuferfüllers angeordnet und jeweils über eine Produktleitung mit einem zugeordneten Durchflussmesser verbunden sind, wobei die Steuerung mit den Füllventilen sowie den zugeordneten Durchflussmessern in Kommunikation steht und eingerichtet ist, um die Füllventile während des Füllvorgangs, d.h. insbesondere während des Einleitens des Füllprodukts in den Behälter, anzusteuern, und die Steuerung mit den Durchflussmessern jeweils bidirektional in Kommunikation steht und eingerichtet ist, um eine Parametrierung der betreffenden Durchflussmessers in Abhängigkeit einer oder mehrerer Füllprozessgrößen vorzunehmen.

Die oben genannte Aufgabe wird ferner durch ein Verfahren zum Befüllen eines Behälters mit einem Füllprodukt, vorzugsweise in einer Getränkeabfüllanlage, gelöst, wobei das Verfahren aufweist: Bereitstellen des Füllprodukts und Einleiten desselben über eine Produktleitung und ein daran angebundenes Füllventil in den Behälter; Ermitteln einer die Produktleitung passierenden Füllproduktmenge durch einen an die Produktleitung angebundenen Durchflussmesser; und Ansteuern des Füllventils während des Füllvorgangs, d.h. zum Einleiten des Füllprodukts in den Behälter, über eine Steuerung, die mit dem Füllventil sowie dem Durchflussmesser in Kommunikation steht; wobei die Steuerung mit dem Durchflussmesser bidirektional in Kommunikation steht und eine Parametrierung des Durchflussmessers in Abhängigkeit einer oder mehrerer Füllprozessgrößen vornimmt.

Die Merkmale, technischen Wirkungen, Vorteile sowie Ausführungsbeispiele, die in Bezug auf die Vorrichtung beschrieben wurden, gelten analog für das Verfahren.

So nimmt die Steuerung aus den oben genannten Gründen die Parametrierung des Durchflussmessers vorzugsweise während des Füllprozesses, vorzugsweise während des Einleitens des Füllprodukts in den Behälter, vor.

Vorzugsweise ist das Füllventil aus den oben genannten Gründen ein Proportionalventil, umfassen die eine oder mehreren Füllprozessgrößen eine Steuergröße zur Ansteuerung des Füllventils und ist die Steuergröße ein Maß für den einzustellenden Öffnungsgrad des Füllventils.

Vorzugsweise ist der Durchflussmesser induktiver Bauart und umfassen aus den oben genannten Gründen die bei der Parametrierung des Durchflussmessers anzupassenden Parameter eine Frequenz und/oder Stärke eines elektromagnetischen Felds und/oder eine Abtastrate.

Vorzugsweise umfasst aus den oben genannten Gründen die Parametrierung des Durchflussmessers eine Anpassung einer durchflussmesserseitigen Elektronik und/oder eines Algorithmus zur Ermittlung und/oder Auswertung der vom Durchflussmesser aufgenommenen Messdaten.

Vorzugsweise weist das Füllprodukt eine Basisflüssigkeit und zumindest eine Dosagekomponente auf, wobei das Verfahren aus den oben genannten Gründen in diesem Fall ferner aufweist: Bereitstellen der Basisflüssigkeit durch das Basisreservoir; Einfüllen der Basisflüssigkeit aus dem Basisreservoir in den Dosierraum der Basislinie; Einfüllen der Dosagekomponente aus dem Dosagezweig der Basislinie in den Dosierraum der Basislinie, wobei für die Eindosierung der Dosagekomponente der Durchflussmesser der Basislinie die in der Basisleitung den Durchflussmesser passierende Füllproduktmenge bestimmt; und Entleeren des Dosierraums der Basislinie über das Füllventil in den Behälter.

Dieses Verfahren im Fall einer oder mehrerer Nebenlinien kann entsprechend ferner umfassen: Einfüllen der Basisflüssigkeit aus dem Basisreservoir in den Dosierraum der Nebenlinie; Einfüllen der Dosagekomponente aus dem Dosagezweig der Nebenlinie in den Dosierraum der Nebenlinie, wobei für die Eindosierung der Dosagekomponente der Durchflussmesser der Nebenlinie die in der Leitung der Nebenlinie den Durchflussmesser der Nebenlinie passierende Fluidmenge bestimmt; und Entleeren des Dosierraums der Basislinie und des Dosierraums der Nebenlinie über das Füllventil in den Behälter. Die Entleerung des Dosierraums der Basislinie und des Dosierraums der Nebenlinie wird vorzugsweise im Wesentlichen gleichzeitig durchgeführt. Dies kann durch ein gleichzeitiges Öffnen des Füllventils und des Ventils der Nebenlinie erreicht werden.

Verschiedene Methoden des Befüllens sowie weitere Vorteile und Merkmale der vorliegenden Erfindung sind aus der folgenden Beschreibung bevorzugter Ausführungsbeispiele ersichtlich. Die darin beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Darstellung einer Vorrichtung zum Befüllen eines Behälters mit einem Füllprodukt;
- Figur 2: ein Schaubild, das die Parametrierung eines Durchflussmessers anhand beispielhafter Parameter und Füllprozessgrößen schematisch darstellt;
- Figur 3: eine schematische Darstellung einer Vorrichtung zum Befüllen eines Behälters mit einem Füllprodukt gemäß einem weiteren Ausführungsbeispiel; und
- Figur 4: eine schematische Darstellung einer Vorrichtung zum Befüllen eines Behälters mit einem mehrkomponentigen Füllprodukt gemäß einem weiteren Ausführungsbeispiel.

### Detaillierte Beschreibung bevorzugter Ausführungsbeispiele

Im Folgenden werden bevorzugte Ausführungsbeispiele anhand der Figuren beschrieben. Dabei sind gleiche, ähnliche oder gleichwirkende Elemente in den Figuren teilweise mit identischen Bezugszeichen versehen, und auf eine wiederholte Beschreibung dieser Elemente wird gegebenenfalls verzichtet, um Redundanz zu vermeiden.

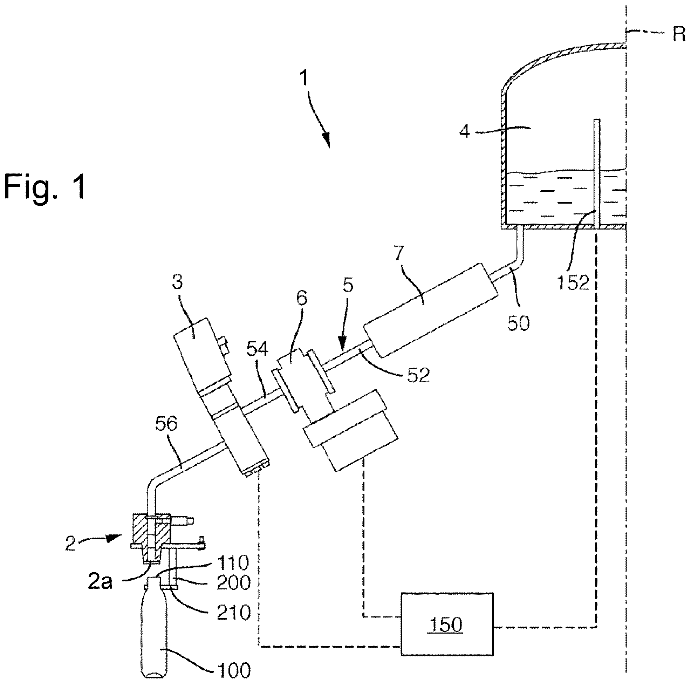

Die Figur 1 zeigt schematisch eine Vorrichtung 1 zum Befüllen eines Behälters 100 mit einem Füllprodukt.

In dem in der Figur 1 gezeigten Ausführungsbeispiel umfasst die Vorrichtung 1 ein Füllventil 2, das hier beispielhaft in Form eines Freistrahlventils vorgesehen ist. Das Füllventil 2 gibt über eine Ventilmündung 2a ein Füllprodukt so aus, dass dieses nach Überbrückung eines Freistrahlbereiches in eine Mündung 110 des mit dem Füllprodukt zu befüllenden Behälters 100 eingefüllt wird. Solche Füllventile 2 in Form von Freistrahlventilen sind beispielsweise zum Abfüllen von stillen Füllprodukten, insbesondere zum Abfüllen von stillem Wasser bekannt. Allerdings kommen auch andere Füllprodukte in Betracht, wie beispielsweise Saft, Smoothies, Wein, Milchprodukte und dergleichen. Karbonisierte Getränke, wie beispielsweise Sprudelwasser, Bier, Softdrinks und dergleichen, werden zumeist mit Anlagen in einem Gegendruckverfahren oder Unterdruckverfahren abgefüllt, die weiter unten anhand weiterer Ausführungsformen dargelegt sind.

Der zu befüllende Behälter 100 wird über eine Behälterhalterung 200, die beispielsweise eine Halteklammer 210 zum Halten des zu befüllenden Behälters 100 im Halsbereich, etwa unterhalb eines hier nicht gezeigten Halsrings des Behälters 100, aufweist, während der Befüllung an dem oder unter dem Füllventil 2 gehalten. Es wird hier auch von einem sogenannten "neck handling" des zu befüllenden Behälters 100 gesprochen. Das "neck handling" findet insbesondere im Fall des Befüllens von Kunststoffbehältern in Form von PET-Flaschen Anwendung.

In einer in den Figuren nicht gezeigten Alternative kann der zu befüllende Behälter 100 auch in seinem Bodenbereich gehalten beziehungsweise gestützt werden, beispielsweise durch einen Führungsteller, auf dem der zu befüllende Behälter 100 aufsteht. Es wird hier auch von einem sogenannten "base handling" des zu befüllenden Behälters 100 gesprochen. Das "base handling" findet insbesondere im Fall des Befüllens von Glasflaschen Anwendung.

In einer in den Figuren ebenfalls nicht gezeigten Alternative kann der zu befüllende Behälter 100 auch im Bereich des Behälter- bzw. Flaschenbauchs oder auf eine andere geeignete Weise gehalten und/oder gestützt und transportiert werden.

Das Füllventil 2 ist besonders bevorzugt als Proportionalventil 3 ausgebildet oder umfasst ein solches, das der Ventilmündung 2a vorgelagert ist, d.h. stromaufwärts der Ventilmündung 2a angeordnet ist. Optional kann im Bereich der Ventilmündung 2a ein Sperrventil vorgesehen sein, das die Ventilmündung 2a nach Bedarf öffnet/schließt kann. Das Proportionalventil 3 ist eingerichtet, um den Volumenstrom des Füllprodukts zu variieren, somit die pro Zeiteinheit in den Behälter 100 eingeleitete Füllproduktmenge zu regulieren. Ziel ist es, ein effizientes, exaktes und produktschonendes Befüllen sicherzustellen.

Das Proportionalventil 3 kann beispielsweise so aufgebaut sein, dass ein von dem jeweiligen Füllprodukt durchflossener Ringspalt in seiner Dimension variierbar ist. Die Schaltstellung des Proportionalventils 3, also beispielsweise die aktuell geschaltete Abmessung/Dimension des Ringspalts, ist bekannt und reproduzierbar einstellbar, beispielsweise durch die Verwendung eines Schrittmotors zum Antrieb des Proportionalventils 3.

Mit dem Proportionalventil 3 können eine oder mehrere Eigenschaften der Füllkurve, d.h. des Volumenstroms pro Zeiteinheit, wie beispielsweise das Füllende bei Erreichen eines gewünschten Füllniveaus oder die Füllkurve in ihrer Gesamtheit festgelegt werden.

Das Füllprodukt wird vor der eigentlichen Abfüllung in die zu befüllenden Behälter 100 in einem Füllproduktreservoir 4 zwischengelagert, wobei das Füllproduktreservoir 4 hier in Form eines Zentralkessels eines Rundläuferfüllers gezeigt ist. In einer alternativen Ausführungsform kann das Füllproduktreservoir 4 beispielsweise auch in Form eines Ringkessels, einer Spülleitung oder einer Verteilerzuführung ausgebildet sein.

In dem Füllproduktreservoir4 ist das Füllprodukt bis zu einer bestimmten Füllhöhe eingefüllt und kann von dort aus über eine Füllproduktleitung 5, die hier beispielhaft einen ersten Leitungsabschnitt 50, einen zweiten Leitungsabschnitt 52, einen dritten Leitungsabschnitt 54 sowie einen vierten Leitungsabschnitt 56 aufweist, zum Füllventil 2 fließen und von dort aus in den zu befüllenden Behälter 100 eingebracht werden.

Neben dem Proportionalventil 3 zur Steuerung oder Regelung des Füllproduktflusses ist weiterhin ein Durchflussmesser 6 vorgesehen, der für eine Detektion der Fluidmenge bzw. des Volumenstroms des die Füllproduktleitung 5 durchfließenden Füllprodukts eingerichtet ist. Mittels des Durchflussmessers 6 kann gegebenenfalls auch die in den Behälter 100 eingebrachte Füllproduktmenge ermittelt werden, etwa durch Integrieren bzw. Aufsummieren des ermittelten Volumenstroms. Auf diese Weise kann nach Erreichen eines gewünschten Füllproduktniveaus in dem zu befüllenden Behälter 100 der Füllvorgang durch Schließen des Proportionalventils 3 und/oder durch Schließen eines hier nicht gezeigten Sperrventils beendet werden kann.

Das Füllventil 2 inkl. Proportionalventil 3, der Durchflussmesser 6 und Abschnitte der Füllproduktleitung 5, etwa die Leitungsabschnitte 52, 54 und 56, können eine gedankliche und/oder bauliche Einheit bzw. Komponente bilden, die hierin als "Füllorgan" bezeichnet ist.

Die in der Figur 1 gezeigte Vorrichtung 1 zeigt nur ein Füllorgan, das mit dem Füllproduktreservoir4 verbunden ist. Die Vorrichtung 1 weist jedoch vorzugsweise eine Vielzahl von Füllorganen auf, die etwa um das dann gemeinsame Füllproduktreservoir 4 herum angeordnet sind, um auf diese Weise einen Rundläuferfüller auszubilden. Der Rundläuferfüller rotiert dabei um eine schematisch gezeigte Rotationsachse R, um während der Rotation die zu befüllenden Behälter 100 zu befüllen und diese gleichzeitig zu transportieren. Am Umfang des Rundläuferfüllers können beispielsweise mehr als 20 oder 50 Füllventile 10 angeordnet sein, sodass eine effiziente Befüllung eines dem Rundläuferfüller zugeführten Stromes an zu befüllenden Behältern 100 durchführbar ist.

Die Vorrichtung 1 kann - als Bestandteil oder außerhalb des Füllorgans - einen oder mehrere Filter 7 aufweisen, der vorzugsweise zwischen dem ersten Abschnitt 50 der Füllproduktleitung 5 und dem zweiten Abschnitt 52 der Füllproduktleitung 5 angeordnet ist. Der Filter 7 ist eingerichtet, um eine Reinigung des Füllprodukts vor der Abfüllung vorzunehmen, beispielsweise um Partikel, Viren, Bakterien, Keime, Pilze usw. aus dem Füllprodukt herauszufiltern. Der Filter 7 ist besonders dann von Bedeutung, wenn die Vorrichtung 1 zum Abfüllen von stillem Wasser vorgesehen ist.

Die aktuelle Füllhöhe des Füllprodukts im Füllproduktreservoir4 kann beispielsweise mittels einer Füllhöhensonde 152 gemessen werden.

Die Vorrichtung 1 weist ferner eine Steuerung 150 auf, die zur Kommunikation mit dem Füllorgan eingerichtet ist. Insbesondere steht die Steuerung 150 mit dem Proportionalventil 3 sowie dem Durchflussmesser 6 in Kommunikation, um unter Verwendung der vom Durchflussmesser 6 ermittelten Volumenstromwerte die aktuelle Schaltstellung des Proportionalventils 3 festzulegen. Ferner kann eine Auswertung der Füllhöhe im Füllproduktreservoir 4 mittels der Steuerung 150 vorgenommen werden.

Die Steuerung 150 kann zentral oder dezentral, Bestandteil internetbasierter und/oder cloudbasierter Anwendungen oder auf andere Weise implementiert sein, sowie gegebenenfalls auf Datenbanken zugreifen. Die Kommunikation der Steuerung 150 mit den entsprechenden Komponenten kann drahtlos oder drahtgebunden erfolgen.

Die Steuerung 150 ist ferner eingerichtet, um einen oder mehrere Parameter des Durchflussmessers 6 an einen oder mehrere Füllprozessgrößen anzupassen. In anderen Worten, in Abhängigkeit einer oder mehrerer Füllprozessgrößen erfolgt eine Parametrierung des Durchflussmessers 6 insbesondere zur Anpassung des Messbereichs bzw. zur Optimierung des Messbereichs. Zu diesem Zweck stehen die Steuerung 150 und der Durchflussmesser 6 bidirektional in Kommunikation. Die Anpassung des einen oder der mehreren Parameter des Durchflussmessers 6 erfolgt vorzugsweise während des Füllprozesses, d.h. während des Einleitens des Füllprodukts in den Behälter 100.

Im Fall eines induktiven Durchflussmessers 6 umfassen die anzupassenden Parameter beispielsweise einen oder mehrere der folgenden Parameter: Frequenz des elektromagnetischen Felds zur Ladungstrennung im Füllprodukt, Stärke des elektromagnetischen Felds, Abtastrate. Im Fall eines Durchflussmessers 6 des Wirkdruck- oder Massendurchflussmessverfahrens umfassen die anzupassenden Parameter beispielsweise einen oder mehrere der folgenden Parameter: Messblende, Frequenz eines Schwingsystems, Amplitude des Schwingsystems. Alternativ oder zusätzlich kann auch ein Algorithmus zur Auswertung der Sensordaten des Durchflussmessers 6 und Erstellung der von der Steuerung 150 zu verarbeitenden Daten, insbesondere Volumenstromdaten, in Abhängigkeit von einer oder mehreren Füllprozessgrößen angepasst werden. Auch durchflussmesserseitige Elektronik inklusive etwaiger Algorithmen zur Messdatenverarbeitung fällt unter die Parameter zur Parametrierung des Durchflussmessers 6.

Als Füllprozessgröße zur Parametrierung des Durchflussmessers 6 kommt insbesondere und besonders bevorzugt eine Steuergröße von der Steuerung 150 an das Proportionalventil 3 in Betracht. Die Steuergröße kann den einzustellenden Öffnungsgrad des Proportionalventils 3 unmittelbar oder mittelbar kennzeichnen. "Mittelbar" bedeutet hierbei, dass die Steuergröße beispielsweise die gewünschte Durchflussmenge, Abfüllmenge oder eine andere Größe, die ein Maß für den Öffnungsgrad des Proportionalventils 3 ist oder bestimmt, sein kann.

Durch eine solche bidirektionale Kommunikation zwischen dem Durchflussmesser 6 und der Steuerung 150 kann der Durchflussmesser 6 im Hinblick auf die Abfüllmenge und Wunschgeschwindigkeit basierend beispielsweise auf einer abzufahrenden Füllkurve dynamisch, zu jedem Zeitpunkt optimal parametriert werden, wodurch die Abfüllgenauigkeit und Zuverlässigkeit verbessert wird.

Die vorstehend dargelegte Parametrierung des Durchflussmessers 6 kann gegebenenfalls auch mittelbar durch die Steuerung 150 erfolgen, indem eine Kommunikation zwischen dem Proportionalventil 3 und dem Durchflussmesser 6 derart implementiert wird, dass das Proportionalventil 3 seinen Zustand an den Durchflussmesser 6 sendet, der daraufhin seine Parameter bzw. seinen Messbereich auf den Öffnungsgrad des Proportionalventils 3 abstimmen kann.

Alternativ oder zusätzlich zur Steuergröße können ein oder mehrere andere Füllprozessgrößen für die Parametrierung des Durchflussmessers 6 herangezogen werden. So kommen diesbezüglich beispielsweise eine oder mehrere der folgenden Füllprozessgrößen in Betracht: Viskosität des Füllprodukts, Brix-Gehalt des Füllprodukts, Fruchtfasergehalt bzw. Stückigkeit des Füllprodukts, Pulpegehalt und/oder andere Füllprodukteigenschaften.

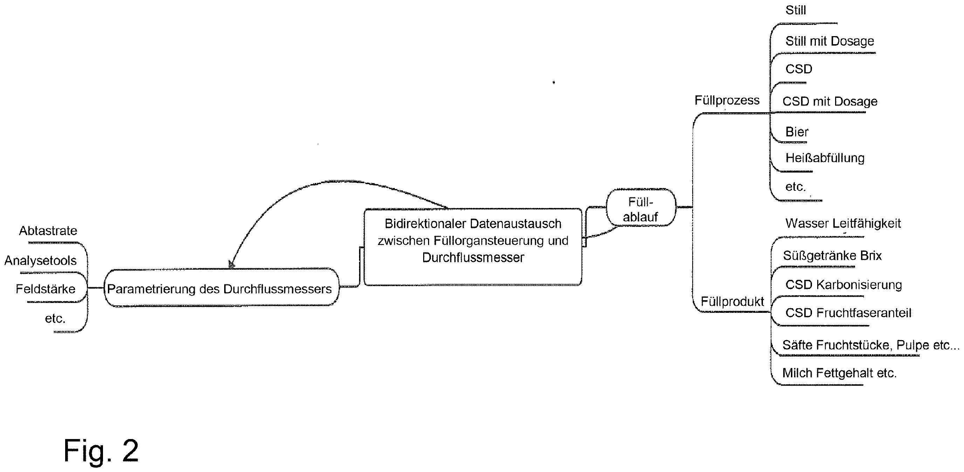

Eine Übersicht über die Parametrierung des Durchflussmessers 6, beispielhafte Parameter und Füllprozessgrößen gibt die Figur 2.

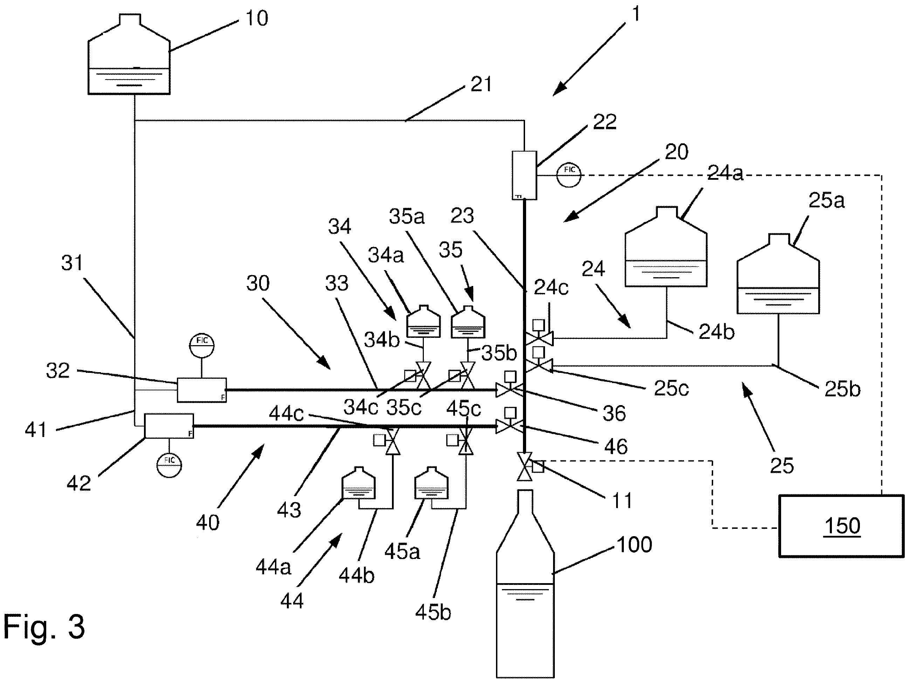

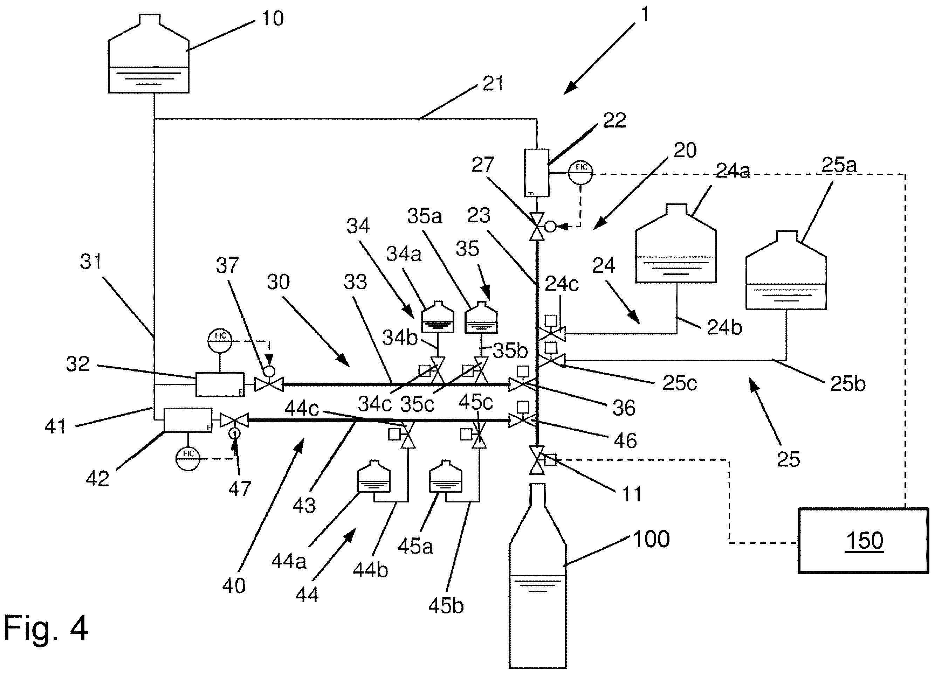

Durch die Anpassung des Arbeitsbereichs des Durchflussmessers 6 an Füllprozessgrößen wie etwa Füllprodukteigenschaften und/oder Steuergrößen an das Proportionalventil 3, beispielsweise die beabsichtigte bzw. zu erwartende Fließgeschwindigkeit, kann eine wesentlich bessere Genauigkeit bei der Abfüllung erreicht werden. Ebenso kann die Genauigkeit von Dosagen verbessert werden, wie dies nachstehend in Bezug auf die Ausführungsbeispiele der Figuren 3 und 4 dargelegt ist. Durch die Verbesserung der Abfüllgenauigkeit und Zuverlässigkeit lassen sich Ausschuss reduzieren und Ressourcen, insbesondere auch Füllprodukt selbst, einsparen.

Die hier dargelegte dynamische Parametrierung eines oder mehrerer Durchflussmesser 6 ist nicht auf Freistrahlfüller 1 beschränkt. Vielmehr kann die dynamische Parametrierung stets dann sinnvoll genutzt werden, wenn zur Steuerung oder Regelung des Abfüllprozesses ein oder mehrere Durchflussmesser 6 zur Anwendung kommen.

So kann die dynamische Parametrierung beispielsweise in einem sogenannten Gegendruckverfahren angewendet werden, das insbesondere bei der Abfüllung karbonisierter Füllprodukte, wie beispielsweise Bier, Mineralwasser oder Softdrinks, zur Anwendung kommt. Hierbei wird der zu befüllende Behälter 100 vor dem Einleiten des Füllprodukts mit einem Spanngas auf einen Überdruck vorgespannt. Zu diesem Zweck werden die Behältermündung 110 und die Ventilmündung 2a in eine druckdichte Verbindung gebracht. Als Spanngas wird beispielsweise CO₂ verwendet. Entsprechend wird das in dem karbonisierten Füllprodukt gebundene CO₂ beim Einfüllen in den zu befüllenden Behälter gegen den erhöhten CO₂-Druck eingefüllt, so dass ein Entbinden des CO₂ aus dem Füllprodukt verringert oder sogar ganz verhindert werden kann. Die Neigung des Füllprodukts zum Aufschäumen wird reduziert, so dass auf diese Weise der Füllvorgang insgesamt beschleunigt werden kann.

Alternativ kann die dynamische Parametrierung bei Unterdruckverfahren angewendet werden, in denen das Füllprodukt unter einem Fülldruck in den Behälter, der sich relativ zum Fülldruck unter Unterdruck befindet, eingeleitet wird. Dieser Fall wird hierin auch als "schlagartiges Befüllen" bezeichnet, da das Einleiten des Füllprodukts besonders schnell realisierbar ist. Um den Behälter 100 mit dem Füllprodukt schlagartig zu befüllen, wird der Innenraum des Behälters 100 bei verschlossenem Füllventil 2 und einem geöffneten Vakuumventil (in den Figuren nicht dargestellt) über eine Vakuumvorrichtung (in den Figuren nicht dargestellt) evakuiert und entsprechend auf einen Unterdruck gebracht. Ist der vorgegebene Unterdruck, beispielsweise 0,1 bar, in dem Behälter 100 erreicht, werden das Vakuumventil geschlossen und das Füllventil 2 geöffnet. Durch die große Druckdifferenz zwischen dem Innenraum des Behälters 100, in dem nun ein Unterdruck herrscht, und dem Füllproduktreservoir 4, in dem ein Überdruck (relativ zum Unterdruck im Behälter 100 und/oder relativ zum Normaldruck) herrscht, kommt es zu einer schlagartigen Befüllung des Behälters 100 mit dem Füllprodukt. Der Füllvorgang kann damit sehr schnell durchgeführt werden und ist entsprechend auch schnell beendet.

Da beim schlagartigen Befüllen während des Füllvorgangs aufgrund des sich bereits im Behälter 100 befindlichen Unterdrucks zumindest in der ersten Phase der Befüllung kein Gas aus dem Behälter 100 verdrängt sondern lediglich der Unterdruck abgebaut wird, kann das Füllprodukt auch über den gesamten Mündungsquerschnitt der Mündung 110 des Behälters 100 hinweg in den Behälter 100 einströmen. Maßnahmen zum Ableiten eines während der Befüllung verdrängten Gases sind nicht erforderlich.

Ein weiteres Ausführungsbeispiel für die dynamische Parametrierung eines oder mehrerer Durchflussmesser geht aus der Figur 3 hervor. Die Figur 3 ist eine schematische Darstellung einer Vorrichtung 1 zum Befüllen eines Behälters 100 mit einem mehrkomponentigen Füllprodukt. Da einige Bauteile wie das Füllventil, die Durchflussmesser usw. der Vorrichtung 1 im Fall des Ausführungsbeispiels der Figur 3 einen anderen Aufbau und eine andere Funktionsweise im Vergleich zum Ausführungsbeispiel der Figur 1 haben, werden zur Unterscheidung teilweise eigene Bezugszeichen verwendet.

Die Vorrichtung 1 der Figur 3 weist ein Basisreservoir 10 für eine Basisflüssigkeit, die auch als Hauptprodukt angesehen werden kann, sowie ein Füllventil 11 auf. Die Basisflüssigkeit und Dosagekomponenten, die über ein nachstehend beschriebenes Fluidsystem hinzugemischt werden, werden über das Füllventil 11 in den Behälter 100 eingeleitet. Die Basisflüssigkeit ist beispielsweise Wasser. Die Dosagekomponenten können beispielsweise Sirup, Fruchtfleisch enthaltende Flüssigkeiten, Pulpe, Aromen usw. umfassen. Da die Vorrichtung 1 jedoch nicht nur zum Abfüllen von Getränken im Lebensmittelbereich geeignet ist, sondern beispielsweise auch für die Zusammenmischung/Dosierung und/oder Abfüllung von Arzneimitteln, Kosmetika, Farben und anderen Flüssigkeiten, umfassend hochviskose und pastöse Flüssigkeiten, ist die Wahl der Basisflüssigkeit und Dosagekomponente(n) nicht auf besondere Weise eingeschränkt.

Die Vorrichtung 1 weist eine Basislinie 20 und im vorliegenden Ausführungsbeispiel beispielhaft zwei Nebenlinien 30, 40 auf, die für das Einmischen von Dosagekomponenten unterschiedlicher Mengen und/oder einer größeren Anzahl in die Basisflüssigkeit eingerichtet sind. Allerdings sind die Nebenlinien 30, 40 optional und, sofern vorhanden, deren Anzahl beliebig skalierbar. Die in dieser Gruppe von Ausführungsbeispielen dargelegte Dosierung durch Rückwärtsverdrängung ist ebenso im Fall der Basislinie 20 ohne daran angebundene Nebenlinien 30, 40 implementierbar.

Die Basislinie 20 weist zu diesem Zweck eine Basisleitung 21 auf, die sich vom Basisreservoir 10 zum Füllventil 11 erstreckt. Die Basisleitung 21 ist mit einem Durchflussmesser 22 der Basislinie ausgestattet. Der Durchflussmesser 22 ist vorzugsweise eine berührungslose, insbesondere eine induktive Messeinrichtung zur Bestimmung des den Durchflussmesser 22 passierenden Flüssigkeitsstroms, Volumenstroms, der transportierten Masse oder dergleichen. Dies gilt gleichermaßen für die nachstehend beschriebenen Durchflussmesser 32, 42 der Nebenlinien.

Der Abschnitt der Basisleitung 21, der sich zwischen dem Durchflussmesser 22 und dem Füllventil 11 befindet, sei als Dosierraum 23 der Basislinie 20 bezeichnet oder enthält einen solchen. In den Dosierraum 23 münden gemäß dem vorliegenden Ausführungsbeispiel zwei Dosagezweige 24, 25. Die beiden Dosagezweige 24, 25 weisen jeweils ein Dosagereservoir 24a, 25a, eine damit in Fluidverbindung stehende Dosageleitung 24b, 25b sowie ein Dosageventil 24c, 25c auf, das die zugehörige Dosageleitung 24b, 25b mit dem Dosierraum 23 der Basislinie schaltbar in Fluidverbindung bringt.

Mit der Auswahl der Nennweiten des Dosierraums 23, des Durchflussmessers 22 und/oder der Dosagezweige 24, 25 wird ein Dosierbereich für die Basislinie 20 festgelegt, der gemäß dem vorliegenden Ausführungsbeispiel vorzugsweise für vergleichsweise große Dosagemengen ausgelegt ist.

Für die Dosage anderer, vorzugsweise kleinerer, Mengen weist die Vorrichtung 1 gemäß dem vorliegenden Ausführungsbeispiel eine erste und eine zweite Nebenlinie 30, 40 auf, die beispielsweise entsprechend für die Dosage von Kleinmengen und Kleinstmengen ausgelegt sein können. Die erste Nebenlinie 30 weist eine Leitung 31 der ersten Nebenlinie auf, die mit einem Durchflussmesser 32 der ersten Nebenlinie ausgestattet ist. Analog weist die zweite Nebenlinie 40 eine Leitung 41 der zweiten Nebenlinie auf, die mit einem Durchflussmesser 42 der zweiten Nebenlinie ausgestattet ist.

Die Leitungen 31 und 41 der beiden Nebenlinien 30, 40 beziehen wie die Basisleitung 21 die Basisflüssigkeit, indem diese mit dem Basisreservoir 10 verbunden sind oder stromaufwärts des Durchflussmessers 22 von der Basisleitung 21 abzweigen. Beide Leitungen 31, 41 münden über ein entsprechendes Ventil 36, 46 der ersten und zweiten Nebenlinie, die vorzugsweise als Absperrventile ausgeführt sind, in den Dosierraum 23 der Basislinie 20 ein. Analog zur Basislinie 20 befinden sich zwischen den Durchflussmessern 32, 42 und den zugehörigen Ventilen 36, 46 je ein Dosierraum, die hierin als Dosierraum 33 der ersten Nebenlinie und Dosierraum 43 der zweiten Nebenlinie bezeichnet sind. Es sei darauf hingewiesen, dass die Basislinie 20 und die Nebenlinien 30, 40 die Basisflüssigkeit aus unterschiedlichen Reservoiren beziehen können, auch wenn in der Figur 3 der Übersichtlichkeit halber nur ein Basisreservoir 10 gezeigt ist.

In die Dosierräume 33, 43 der Nebenlinien münden jeweils zwei Dosagezweige, die unter Fortführung der hierin gewählten Terminologie als erster Dosagezweig 34 der ersten Nebenlinie, zweiter Dosagezweig 35 der ersten Nebenlinie, erster Dosagezweig 44 der zweiten Nebenlinie und zweiter Dosagezweig 45 der zweiten Nebenlinie bezeichnet sind. Die Dosagezweige 34, 35, 44, 45 der Nebenlinien weisen jeweils ein Dosagereservoir 34a, 35a, 44a, 45a, eine damit in Fluidverbindung stehende Dosageleitung 34b, 35b, 44b, 45b sowie ein Dosageventil 34c, 35c, 44c, 45c auf, das die Dosageleitung 34b, 35b, 44b, 45b mit dem zugehörigen Dosierraum 33, 43 schaltbar in Fluidverbindung bringt.

Die ersten Dosagereservoire 24a, 34a, 44a stellen vorzugsweise eine erste Dosagekomponente und die zweiten Dosagereservoire 25a, 35a, 45a stellen vorzugsweise eine zweite Dosagekomponente, die sich von der ersten Dosagekomponente unterscheidet, bereit, so dass in den Nebenlinien 30, 40 prinzipiell die gleichen Dosagekomponenten zur Basisflüssigkeit wie in der Basislinie 20 hinzugefügt werden können, jedoch optimiert für unterschiedliche Dosagemengen bzw. Dosageregime. Allerdings ist eine solche Entsprechung nicht unbedingt erforderlich. So können die Dosagereservoire 24a, 34a, 44a, 25a, 35a, 45a der Basis- und Nebenlinien 20, 30, 40 auch unterschiedliche Dosagekomponenten beinhalten, wodurch die Flexibilität der Anlage erhöht werden kann, indem beispielsweise aktuell nicht benötigte Dosagekomponenten für einen späteren Gebrauch vordosiert werden.

Die Füllproduktleitung 5 der Ausführungsform der Figur 1, die Basisleitung 21, die Dosierräume 23, 33, 43 sowie die Dosageleitungen 24b, 25b, 34b, 44b, 35b und 45b fallen gemeinsam unter die Bezeichnung "Produktleitung".

Nachfolgend wird der Dosage- und Abfüllprozess anhand der Vorrichtung 1 gemäß dem Ausführungsbeispiel der Figur 3 beschrieben:
Alle Linien, d.h. die Basislinie 20 und die beiden Nebenlinien 30, 40, werden zu Beginn jedes Füllzyklus mit der Basisflüssigkeit gespült, wodurch die zugehörigen Dosierräume 23, 33, 43 bei geschlossenem Füllventil 11 und geschlossenen Ventilen 36, 46 mit der Basisflüssigkeit gefüllt werden. Beim Füllen der Dosierräume 23, 33, 43 können die zugehörigen Durchflussmesser 22, 32, 42 den Durchfluss an Basisflüssigkeit in der Vorwärtsrichtung, d.h. der Füllrichtung, messen. Auf diese Weise lässt sich das gewünschte Gesamtfüllvolumen des entsprechenden Dosierraums 23, 33, 43 ermitteln und einstellen.

Anschließend werden in die Dosierräume 23, 33, 43 die Dosagekomponenten eingeleitet, indem die entsprechenden Dosageventile 24c, 25c, 34c, 35c, 44c, 45c geöffnet werden. Die Dosagekomponenten können gleichzeitig oder nacheinander eingeleitet werden. Das Einleiten der Dosagekomponenten führt dazu, dass ein Teil der Basisflüssigkeit rückwärts aus den Dosierräumen 23, 33, 43 heraus verdrängt wird. Hierbei wird der rückwärtsgerichtete Durchfluss von den entsprechenden Durchflussmessern 22, 32, 42 detektiert. Die Dosageventile 24c, 25c, 34c, 35c, 44c, 45c, die als reine Absperrventile oder auch als regelbare Absperrventile ausgeführt sein können, bleiben solange geöffnet, bis das gewünschte Volumen der Dosagekomponente(n) in die Dosierräume 23, 33, 43 eingefüllt ist. Zu diesem Zweck sind die Durchflussmesser 22, 32, 42 sowie die Ventile der Vorrichtung 1 mit einer Steuereinrichtung (in den Figuren nicht dargestellt) kommunizierend verbunden, die auf der Grundlage der Detektionsergebnisse der Durchflussmesser 22, 32, 42 den Zeitpunkt des Öffnens/Schließens oder allgemein das Schaltverhalten der beteiligten Komponenten bestimmt. Es sei darauf hingewiesen, dass die Menge jeder einzelnen Dosagekomponente genau bestimmt werden kann, indem unterschiedliche Dosagekomponenten einer Linie nacheinander eingeleitet werden.

In der anschließenden Abfüllphase werden alle Dosierräume 23, 33, 43 gleichzeitig oder nacheinander über das Füllventil 11 in den Behälter 100 entleert, wodurch die Linien vollständig gespült werde. Das Abfüllvolumen ergibt sich somit aus der Summe der Abfüllvolumina aller Dosierräume 23, 33, 43.

Die Reservoire 10, 24a, 25a, 34a, 35a, 44a, 45a für die Basisflüssigkeit und die Dosagekomponenten können jeweils separat oder gemeinsam mit einem Gasdruck im Kopfraum beaufschlagt werden, um die notwendige Druckdifferenz für die Förderung der entsprechenden Fluide sicherzustellen. Durch eine individuelle Anpassbarkeit des Förderdruckes kann die Fließgeschwindigkeit auch bei unterschiedlichen Medien mit variierenden Dichten und/oder Viskosität variiert und eingestellt werden.

Durch die Auslegung der Nennweiten der Dosierräume 23, 33, 43 auf die gewünschten Dosiermengen und Durchflussgeschwindigkeiten lässt sich eine genaue Dosierung und eine optimale Ausspülung mit der Basisflüssigkeit erzielen. Die Vorrichtung 1 erlaubt zudem eine präzise, individualisierte Dosierung in einem ausgesprochen weiten Dosierbereich, da die schwer zu dosierenden Klein- und Kleinstmengen in dafür optimierte Nebenlinien 30, 40 ausgelagert wird. Die Steuereinrichtung kann nun je nach der gewünschten Dosagemenge bestimmen, durch welche Linie oder durch welche Kombination von Linien das gewünschte Füllprodukt am besten produzierbar ist.

Die Zusammenführung der Linien kurz vor dem Füllventil 11 führt während der Abfüllphase aufgrund der Dosage in eine fließende Strömung zu einer verschleppungsfreien Abfüllung.

Es sei darauf hingewiesen, dass weder die Anzahl der Linien noch die Anzahl der in die einzelnen Linien einmündenden Dosagezweige auf besonderen Weise eingeschränkt sind.

Die Dauer der Dosierphase gibt die maximal für eine Dosagekomponente verfügbare Dosierzeit vor, in dem Fall, dass die anderen Dosagekomponenten der entsprechenden Linie nicht dosiert werden müssen. Ebenso ist während der Dosierphase kein Behälter 100 unter dem Füllventil 11 notwendig. Somit kann die Dosierphase synergetisch für den Behältertransport verwendet werden.

Ein weiteres Ausführungsbeispiel berücksichtigt die Tatsache, dass die Reaktionszeiten zwischen der Durchflussmengendetektion mittels der Durchflussmesser 22, 32, 42 und der Schaltung der Dosageventile 24c, 25c, 34c, 35c, 44c, 45c, insbesondere die Schwankungen der Reaktionszeiten, die Genauigkeit der Dosiermenge mitbestimmen. Im Lebensmittelbereich werden für produktberührte Anwendungen überwiegend pneumatische Ventile verwendet. Diese weisen jedoch den technischen Nachteil tendenziell längerer Reaktionszeiten gegenüber magnetisch angetriebenen Ventilen auf und können damit zu einer Verringerung der Dosagegenauigkeit führen.

Aus diesem Grund ist es nützlich, insbesondere bei der Abfüllung von Füllprodukten im Lebensmittelbereich, Dosierventile in der Umgebung der Durchflussmesser 22, 32, 42, vorzugsweise direkt hinter den Durchflussmessern, anzuordnen. Die Figur 4 ist eine schematische Darstellung einer solchen Vorrichtung 1 gemäß einem weiteren Ausführungsbeispiel.

Hierbei befinden sich unmittelbar stromabwärts der Durchflussmesser 22, 32, 42 jeweils ein Dosierventil 27, 37, 47. Die Dosierventile 27, 37, 47 sind vorzugsweise magnetisch schaltbar, um deren Reaktionszeit zu optimieren. Die Dosierventile 27, 37, 47 reagieren bei einem magnetischen Antrieb sehr schnell und können sowohl als reine Absperrventile, insbesondere für kurze Dosierzeiten, als auch als Absperr- und Regelventile, insbesondere für längere Dosierzeiten, ausgeführt sein. Wenn die Dosierventile 27, 37, 47 ferner so eingebaut und eingerichtet sind, dass sie ausschließlich von der Basisflüssigkeit, beispielsweise Wasser, durchströmt werden, sind die Anforderungen an Hygiene und Ausspülverhalten geringer als bei dem Füllventil 11 und den Ventilen 36, 46 der Nebenlinien 30, 40, die auch von den Dosagekomponenten durchflossen werden.

Es sei darauf hingewiesen, dass nicht unbedingt jede Linie mit einem Dosierventil 27, 37, 47 ausgestattet sein muss. Da eine Verbesserung der Dosiergenauigkeit insbesondere für Klein- und Kleinstmengen angestrebt wird, kann es beispielsweise genügen, wenn eine oder mehrere der Nebenlinien 30, 40 ein Dosierventil 37, 47 aufweist.

Der übrige Aufbau der Vorrichtung 1 gemäß der Figur 4 unterscheidet sich nicht von dem der in der Figur 3 dargestellten Vorrichtung 1.

Die Vorrichtung 1 sowie das Verfahren zum Herstellen eines mehrkomponentigen Füllprodukts aus einer Basisflüssigkeit und zumindest einer darin eingemischten Dosagekomponente und Abfüllen des Füllprodukts gemäß den hierin dargelegten Ausführungsbeispielen der Figuren 3 und 4 stellen verschiedene technische Beiträge und Vorteile gegenüber herkömmlichen Konzepten bereit. So vereinfacht die vollständige Befüllung des Behälters 100 an einer einzigen Position die Handhabung der Behälter 100. Ferner muss während der Dosierphase kein Behälter 100 unter dem Füllventil 11 stehen, da die Dosierung nicht beim Abfüllen sondern in den Dosierräumen 23, 33, 43 vorgenommen wird. Die Zeit zum Dosieren kann synergetisch für den Behältertransport verwendet werden. Damit ist das hierin dargestellte Konzept sowohl für Lineartaktmaschinen mit einer oder mehreren Füllstellen als auch Rundläufermaschinen anwendbar. Im Fall von Rundläufermaschinen können die Behälter 100 das Karussell schon nach einem geringen Drehwinkel wieder verlassen. Im Fall von Füllmaschinen, die zum Abfüllen karbonisierter Getränke eingerichtet sind, kann eine etwaige Entlastungszeit synergetisch für die Dosierphase des nachfolgenden Behälters 100 genutzt werden.

Ein wichtiger technischer Beitrag besteht darin, dass durch die Anwendung einer oder mehrerer Nebenlinien 30, 40, die wie Dosagezweige in den Dosierraum 23 der Basislinie 20 einmünden, der Dosierbereich vergrößert und die Genauigkeit der Dosierung, insbesondere bei einer gleichzeitigen Einmischung großer und kleiner Dosiermengen, verbessert werden können. Eine weitere Vergrößerung des Dosierbereiches und/oder Optimierung der Dosierzeit folgt auch daraus, dass in Zeiten, in denen bestimmte Dosagekomponenten in einer Linie nicht dosiert werden, andere Komponenten dosiert werden können. Dies führt zu einer deutlichen Erhöhung der Flexibilität des Dosiersystems.

Die Durchflussmesser 22, 32, 42 und die etwaigen zugehörigen Dosierventile 27, 37, 47 werden stets nur von der Basisflüssigkeit, d.h. in den meisten Fällen Wasser, durchflossen. Damit ändern sich die Medieneigenschaften nicht und das Leitungssystem wird in diesen Bereichen nicht durch unterschiedliche Fluide verschmutzt.

Der maschinenbauliche Aufwand zur Realisierung der Vorrichtung 1 ist gering, da das Leitungssystem durch Rohre oder Schlauchleitungen mit wenigen Ventilen und nur einem einzigen Durchflussmesser pro Linie realisierbar ist. Es müssen keine komplizierten Geometrien eingebaut werden, wodurch die Vorrichtung 1 einfach zu reinigen und zu warten ist. Das Verstopfungsrisiko ist gering. Die Vorrichtung 1 ist zudem zum Dosieren hochviskoser Fluide geeignet. Eine Verschleppung intensiver Aromastoffe, die beispielsweise in Dichtungen migrieren und nicht durch eine Reinigung aus den Dichtungen entfernt werden können, wird minimiert, da die Linien erst kurz vor dem Füllventil 11 zusammengeführt werden und die Füllprodukte aus den Nebenlinien 30, 40 zudem erst bei der Abfüllung in die fließende Strömung der Basislinie 20 eingeleitet werden.

Die Vorrichtung 1 gemäß den Figuren 3 und 4 weist wie in der Ausführungsform der Figur 1 ferner eine Steuerung 150 auf, die zur Kommunikation mit dem Füllorgan eingerichtet ist. Insbesondere steht die Steuerung 150 mit dem Füllventil 11 sowie dem Durchflussmesser 22 in Kommunikation. Die Steuerung 150 ist eingerichtet, um einen oder mehrere Parameter des Durchflussmessers 22 an einen oder mehrere Füllprozessgrößen anzupassen. In anderen Worten, in Abhängigkeit einer oder mehrerer Füllprozessgrößen erfolgt eine Parametrierung des Durchflussmessers 22 insbesondere zur Anpassung des Messbereichs bzw. zur Optimierung des Messbereichs. Zu diesem Zweck stehen der Durchflussmesser 22 und die Steuerung 150 in einer bidirektionalen Kommunikation. Die Anpassung des einen oder der mehreren Parameter des Durchflussmessers 22 erfolgt vorzugsweise während des Füllprozesses, d.h. während der Eindosierung und/oder des Einleitens des Füllprodukts in den Behälter 100.

Auch wenn in den Figuren 3 und 4 die Durchflussmesser 32 und 42 der Nebenlinien 30 und 40, sowie die Ventile 24c, 25c, 36, 46, 34c, 35c, 44c, 45c, 27, 37 und 47 nicht mit der Steuerung 150 in Kommunikation zu stehen scheinen (die gestrichelten Linien wurden der Übersichtlichkeit halber weggelassen), kommunizieren diese zumindest unidirektional mit der Steuerung 150. Vorzugsweise stehen die Durchflussmesser 32 und 42 jedoch bidirektional mit der Steuerung 150 in Kommunikation, um in Abhängigkeit einer oder mehrerer Füllprozessgrößen eine Parametrierung der Durchflussmessers 32 und 42 vornehmen zu können, insbesondere zur Anpassung des Messbereichs bzw. zur Optimierung des Messbereichs.

Hinsichtlich des Aufbaus und beispielhafter Parameter der Durchflussmesser 22, 32, 42, beispielhafter Füllprozessgrößen zur Parametrierung des oder der Durchflussmesser 22, 32, 42 sowie technischer Wirkungen und Vorteile der dynamischen Parametrisierung gelten die oben dargelegten Beschreibungen in Bezug auf die Ausführungsform der Figur 1.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezuqszeichenliste

- 1: Vorrichtung zum Befüllen eines Behälters mit einem Füllprodukt
- 2: Füllventil
- 2a: Ventilmündung
- 3: Proportionalventil
- 4: Füllproduktreservoir
- 5: Füllproduktleitung
- 50: Erster Abschnitt der Füllproduktleitung
- 52: Zweiter Abschnitt der Füllproduktleitung
- 54: Dritter Abschnitt der Füllproduktleitung
- 56: Vierter Abschnitt der Füllproduktleitung
- 6: Durchflussmesser
- 7: Filter

- 100: Behälter
- 110: Mündung
- 150: Steuerung
- 152: Füllhöhensonde
- 200: Behälterhalterung
- 210: Halteklammer

- R: Rotationsachse

- 10: Basisreservoir
- 11: Füllventil
- 20: Basislinie
- 21: Basisleitung der Basislinie
- 22: Durchflussmesser der Basislinie
- 23: Dosierraum der Basislinie
- 24: Erster Dosagezweig der Basislinie
- 24a: Dosagereservoir des ersten Dosagezweigs der Basislinie
- 24b: Dosageleitung des ersten Dosagezweigs der Basislinie
- 24c: Dosageventil des ersten Dosagezweigs der Basislinie
- 25: Zweiter Dosagezweig der Basislinie
- 25a: Dosagereservoir des zweiten Dosagezweigs der Basislinie
- 25b: Dosageleitung des zweiten Dosagezweigs der Basislinie
- 25c: Dosageventil des zweiten Dosagezweigs der Basislinie
- 27: Dosierventil der Basislinie
- 30: Erste Nebenlinie (bspw. für Kleinmengen)
- 31: Leitung der ersten Nebenlinie
- 32: Durchflussmesser der ersten Nebenlinie
- 33: Dosierraum der ersten Nebenlinie
- 34: Erster Dosagezweig der ersten Nebenlinie
- 34a: Dosagereservoir des ersten Dosagezweigs der ersten Nebenlinie
- 34b: Dosageleitung des ersten Dosagezweigs der ersten Nebenlinie
- 34c: Dosageventil des ersten Dosagezweigs der ersten Nebenlinie
- 35: Zweiter Dosagezweig der ersten Nebenlinie
- 35a: Dosagereservoir des zweiten Dosagezweigs der ersten Nebenlinie
- 35b: Dosageleitung des zweiten Dosagezweigs der ersten Nebenlinie
- 35c: Dosageventil des zweiten Dosagezweigs der ersten Nebenlinie
- 36: Ventil der ersten Nebenlinie
- 37: Dosierventil der ersten Nebenlinie
- 40: Zweite Nebenlinie (bspw. für Kleinstmengen)
- 41: Leitung der zweiten Nebenlinie
- 42: Durchflussmesser der zweiten Nebenlinie
- 43: Dosierraum der zweiten Nebenlinie
- 44: Erster Dosagezweig der zweiten Nebenlinie
- 44a: Dosagereservoir des ersten Dosagezweigs der zweiten Nebenlinie
- 44b: Dosageleitung des ersten Dosagezweigs der zweiten Nebenlinie
- 44c: Dosageventil des ersten Dosagezweigs der zweiten Nebenlinie
- 45: Zweiter Dosagezweig der zweiten Nebenlinie
- 45a: Dosagereservoir des zweiten Dosagezweigs der zweiten Nebenlinie
- 45b: Dosageleitung des zweiten Dosagezweigs der zweiten Nebenlinie
- 45c: Dosageventil des zweiten Dosagezweigs der zweiten Nebenlinie
- 46: Ventil der zweiten Nebenlinie
- 47: Dosierventil der zweiten Nebenlinie

## Patentansprüche

1. Vorrichtung (1) zum Befüllen eines Behälters (100) mit einem Füllprodukt, vorzugsweise in einer Getränkeabfüllanlage, wobei die Vorrichtung (1) aufweist:
zumindest ein Füllventil (2, 11), das eingerichtet ist, um das Füllprodukt in den Behälter (100) einzuleiten;
zumindest einen über eine Produktleitung (5, 21) mit dem Füllventil (2, 11) verbundenen Durchflussmesser (6, 22, 32, 42), der eingerichtet ist, um eine in der Produktleitung (5, 21) den Durchflussmesser (6, 22, 32, 42) passierende Füllproduktmenge zu ermitteln; und
eine Steuerung (150), die mit dem Füllventil (2, 11) sowie dem Durchflussmesser (6, 22, 32, 42) in Kommunikation steht und eingerichtet ist, um das Füllventil (2, 11) während des Füllvorgangs anzusteuern;
**dadurch gekennzeichnet, dass**
die Steuerung (150) mit dem Durchflussmesser (6, 22, 32, 42) bidirektional in Kommunikation steht und eingerichtet ist, um eine Parametrierung des Durchflussmessers (6, 22, 32, 42) in Abhängigkeit einer oder mehrerer Füllprozessgrößen vorzunehmen.

2. Vorrichtung (1) nach Anspruch 1, **dadurch gekennzeichnet, dass** die Steuerung (150) eingerichtet ist, um die Parametrierung des Durchflussmessers (6, 22, 32, 42) während des Füllprozesses, vorzugsweise während des Einleitens des Füllprodukts in den Behälter (100), vorzunehmen.

3. Vorrichtung (1) nach Anspruch 1 oder 2, **dadurch gekennzeichnet, dass** die eine oder mehreren Füllprozessgrößen eine Steuergröße der Steuerung (150) zur Ansteuerung des Füllventils (2, 11) und/oder eine oder mehrere Füllprodukteigenschaften, vorzugsweise die Viskosität des Füllprodukts und/oder den Brix-Gehalt des Füllprodukts und/oder den Fruchtfasergehalt des Füllprodukts und/oder den Pulpegehalt, umfassen.

4. Vorrichtung (1) nach einem der vorigen Ansprüche, **dadurch gekennzeichnet, dass** das Füllventil (2, 11) ein Proportionalventil ist.

5. Vorrichtung (1) nach Anspruch 3 und 4, **dadurch gekennzeichnet, dass** die eine oder mehreren Füllprozessgrößen eine Steuergröße der Steuerung (150) zur Ansteuerung des Proportionalventils (2, 11) umfassen und die Steuergröße ein Maß für den einzustellenden Öffnungsgrad des Proportionalventils (2, 11) ist.

6. Vorrichtung (1) nach einem der vorigen Ansprüche, **dadurch gekennzeichnet, dass** der Durchflussmesser (6, 22, 32, 42) induktiver Bauart ist und zumindest ein bei der Parametrierung des Durchflussmessers (6, 22, 32, 42) anzupassender Parameter eine Frequenz und/oder Stärke eines elektromagnetischen Felds und/oder eine Abtastrate umfasst.

7. Vorrichtung (1) nach einem der vorigen Ansprüche, **dadurch gekennzeichnet, dass** die Parametrierung des Durchflussmessers (6, 22, 32, 42) eine Anpassung einer durchflussmesserseitigen Elektronik und/oder eines Algorithmus zur Ermittlung und/oder Auswertung der vom Durchflussmesser (6, 22, 32, 42) detektierten Messdaten umfasst.

8. Vorrichtung (1) nach einem der vorigen Ansprüche, **dadurch gekennzeichnet, dass** das Füllprodukt eine Basisflüssigkeit und zumindest eine Dosagekomponente aufweist, wobei die Vorrichtung (1) aufweist:
ein Basisreservoir (10), das eingerichtet ist, um die Basisflüssigkeit bereitzustellen;
eine Basislinie (20) mit einer Basisleitung (21), die das Basisreservoir (10) mit dem Füllventil (11) in Fluidverbindung bringt, wobei der Durchflussmesser (22) an der Basisleitung (21) zwischen dem Basisreservoir (10) und dem Füllventil (11) angeordnet und eingerichtet ist,
um die in der Basisleitung (21) den Durchflussmesser (22) passierende Füllproduktmenge zu bestimmen, sowie einem Dosierraum (23), der zwischen dem Durchflussmesser (22) und dem Füllventil (11) angeordnet ist; und
zumindest einen Dosagezweig (24) der Basislinie, der eingerichtet ist, um eine Dosagekomponente in den Dosierraum (23) der Basislinie einzuleiten, wobei
der Durchflussmesser (22) der Basislinie vorzugsweise eingerichtet ist, um die passierende Füllproduktmenge in einer Füllrichtung und/oder einer der Füllrichtung entgegengesetzten Richtung zu bestimmen.

9. Vorrichtung (1) nach einem der vorigen Ansprüche, **dadurch gekennzeichnet, dass** diese mehrere Füllventile (2, 11) aufweist, die an einem Karussell eines Rundläuferfüllers angeordnet und jeweils über eine Produktleitung (5, 21) mit einem zugeordneten Durchflussmesser (6, 22, 32, 42) verbunden sind, wobei die Steuerung (150) mit den Füllventilen (2, 11) sowie den zugeordneten Durchflussmessern (6, 22, 32, 42) in Kommunikation steht und eingerichtet ist, um die Füllventile (2, 11) während des Füllvorgangs anzusteuern, und die Steuerung (150) mit den Durchflussmessern (6, 22, 32, 42) jeweils bidirektional in Kommunikation steht und eingerichtet ist, um eine Parametrierung des entsprechenden Durchflussmessers (6, 22, 32, 42) in Abhängigkeit einer oder mehrerer Füllprozessgrößen vorzunehmen.

10. Verfahren zum Befüllen eines Behälters (100) mit einem Füllprodukt, vorzugsweise in einer Getränkeabfüllanlage, wobei das Verfahren aufweist:
Bereitstellen des Füllprodukts und Einleiten desselben über eine Produktleitung (5, 21) und ein daran angebundenes Füllventil (2, 11) in den Behälter (100);
Ermitteln einer die Produktleitung (5, 21) passierenden Füllproduktmenge durch einen an die Produktleitung (5, 21) angebundenen Durchflussmesser (6, 22, 32, 42); und
Ansteuern des Füllventils (2, 11) während des Füllvorgangs über eine Steuerung (150), die mit dem Füllventil (2, 11) sowie dem Durchflussmesser (6, 22, 32, 42) in Kommunikation steht;
**dadurch gekennzeichnet, dass**
die Steuerung (150) mit dem Durchflussmesser (6, 22, 32, 42) bidirektional in Kommunikation steht und eine Parametrierung des Durchflussmessers (6, 22, 32, 42) in Abhängigkeit einer oder mehrerer Füllprozessgrößen vornimmt.

11. Verfahren nach Anspruch 10, **dadurch gekennzeichnet, dass** die Steuerung (150) die Parametrierung des Durchflussmessers (6, 22, 32, 42) während des Füllprozesses, vorzugsweise während des Einleitens des Füllprodukts in den Behälter (100), vornimmt.

12. Verfahren nach Anspruch 10 oder 11, **dadurch gekennzeichnet, dass** das Füllventil (2, 11) ein Proportionalventil ist, die eine oder mehreren Füllprozessgrößen eine Steuergröße der Steuerung (150) zur Ansteuerung des Füllventils (2, 11) umfassen und die Steuergröße ein Maß für den einzustellenden Öffnungsgrad des Füllventils (2, 11) ist.

13. Verfahren nach einem der Ansprüche 10 bis 12, **dadurch gekennzeichnet, dass** der Durchflussmesser (6, 22, 32, 42) induktiver Bauart ist und zumindest ein bei der Parametrierung des Durchflussmessers (6, 22, 32, 42) anzupassender Parameter eine Frequenz und/oder Stärke eines elektromagnetischen Felds und/oder eine Abtastrate umfasst.

14. Verfahren nach einem der Ansprüche 10 bis 13, **dadurch gekennzeichnet, dass** die Parametrierung des Durchflussmessers (6, 22, 32, 42) eine Anpassung einer durchflussmesserseitigen Elektronik und/oder eines Algorithmus zur Ermittlung und/oder Auswertung der vom Durchflussmesser (6, 22, 32, 42) detektierten Messdaten umfasst.

15. Verfahren nach einem der Ansprüche 10 bis 14, **dadurch gekennzeichnet, dass** das Füllprodukt eine Basisflüssigkeit und zumindest eine Dosagekomponente aufweist, wobei das Verfahren mittels einer Vorrichtung gemäß Anspruch 8 durchgeführt wird und aufweist:
Bereitstellen der Basisflüssigkeit durch das Basisreservoir (10);
Einfüllen der Basisflüssigkeit aus dem Basisreservoir (10) in den Dosierraum (23) der Basislinie;
Einfüllen der Dosagekomponente aus dem Dosagezweig (24) der Basislinie in den Dosierraum (23) der Basislinie, wobei für die Eindosierung der Dosagekomponente der Durchflussmesser (22) der Basislinie die in der Basisleitung (21) den Durchflussmesser (22) passierende Füllproduktmenge bestimmt; und
Entleeren des Dosierraums (23) der Basislinie über das Füllventil (11) in den Behälter (2).
